# EUROPEAN PATENT SPECIFICATION

(11) **EP 2 749 624 B1**
(45) Date of publication and mention of the grant of the patent: **20.02.2019**
(21) Application number: 12825515.5
(22) Date of filing: 22.08.2012
(51) Int. Cl.: C09K 5/08, C09K 5/16, F28D 20/00

(54) **CHEMICAL HEAT STORAGE STRUCTURE COMPRISING A CHEMICAL HEAT STORAGE MATERIAL**
CHEMISCHE WÄRMESPEICHERSTRUKTUR ENTHALTEND EIN CHEMISCHES WÄRMESPEICHERMATERIAL
STRUCTURE DE STOCKAGE DE CHALEUR CHIMIQUE COMPRENANT UN MATÉRIAU DE STOCKAGE DE CHALEUR CHIMIQUE

(30) Priority: 23.08.2011 JP 2011181822
(43) Date of publication of application: 02.07.2014
(73) Proprietor: Kabushiki Kaisha Toyota Chuo Kenkyusho, Nagakute-shi, Aichi 480-1192 (JP)
(72) Inventor: AOKI Masakazu, Nagakute-shi Aichi 480-1192 (JP); SHIMAZU Takashi, Nagakute-shi Aichi 480-1192 (JP); YAMAUCHI Takafumi, Nagakute-shi Aichi 480-1192 (JP); MATSUMOTO Mitsuru, Nagakute-shi Aichi 480-1192 (JP)
(74) Representative: Kramer Barske Schmidtchen Patentanwälte PartG mbB
(86) International application number: PCT/JP2012/071219
(87) International publication number: WO 2013/027778

(56) References cited:
- WO-A1-2012/108343
- JP-A- S5 716 797
- JP-A- H01 212 893
- JP-A- H01 302 077
- JP-A- H06 136 357
- JP-A- H06 136 357
- JP-A- H06 508 425
- JP-A- 2005 213 459
- JP-A- 2007 291 267
- US-A- 4 537 695
- US-A- 4 848 994
- US-A- 5 396 775
- MIKIO KUMITA ET AL.: 'Enka Calcium Tenchaku Kyuchakuzai no Chosei to sono Suijoki Kyuchaku Tokusei' ABSTRACTS OF AUTUMN MEETING OF THE SOCIETY OF CHEMICAL ENGINEERS 2007, XP008170975
- 'Ammonia Absorption on Alkaline Earth Halides as Ammonia Separation and Storage Procedure' BULL. CHEM. SOC. JPN. vol. 77, no. 1, 2004, pages 123 - 131, XP002369290

## Description

### [Technical Field]

The present invention relates to a chemical heat storage structure using a chemical heat storage material comprising a double metal salt.

### [Background Art]

With the raising of environmental awareness, research and development are being actively carried out for saving energy and improving energy efficiency. Some of them focus a chemical heat storage system which uses a chemical heat storage material capable of long term heat storage even without heat-retention because the heat storage density is large. This allows relatively low temperature waste heat (or exhaust heat), such as generated from various equipment and plants, to effectively be utilized.

The chemical heat storage system transfers a heat medium (such as ammonia and water) between the chemical heat storage material and a heat medium storage material thereby to perform heat storage (become endothermic) and release the heat (become exothermic). In order for this system to have high efficiency and to be reduced in size, it is important to achieve a matching in operating temperature and working pressure between the chemical heat storage material and the heat medium storage material. Therefore, it is required for the chemical heat storage material not only to have a high heat storage density but also to be capable of efficiently absorbing or releasing the heat medium under the operating temperature and the working pressure that match the heat medium storage material.

As the chemical heat storage material, in general, materials such as calcium oxide (calcined lime) have been conventionally used which react with water to form hydroxide, but in recent years, materials such as metal chloride have been being utilized which form ammonia complex (ammine complex) operable under a lower temperature. A chemical heat storage material consisting only of single metal salt such as calcium chloride (CaCl₂), however, has fixed operating temperature and working pressure, which do not necessarily match the heat medium storage material, and the chemical heat storage system may have to be limited in its efficient operation. In this regard, a chemical heat storage material using plural types of single metal salts is proposed, and descriptions relevant thereto are disclosed in Patent Literature (PTL) below, for example.

### [Citation List]

### [Patent Literature]

[PTL 1]
   Japanese Patent No. 3111667
[PTL 2]
   Japanese Examined Patent Application Publication No. 59-25159
[PTL 3]
   Japanese Unexamined Patent Application Publication No. 01-302077
[PTL 4]
   Japanese Translation of PCT International Application, No. 2007-531209
[PLT 5]
   U. S. Patent No. 5,289,690
[PTL 6]
   U. S. Patent No. 5,396,775

### [Summary of Invention]

### [Technical Problem]

PTL 1 appears to describe that a calcium salt mixture obtained by dissolving, condensing and drying CaCl₂ and CaBr₂ has a higher ammonia (NH₃) release temperature than that of a simple mixture thereof. This Patent Literature, however, does not explicitly disclose the crystal structure and the action of the calcium salt mixture. In addition, the calcium salt mixture may be such that the change in coordination number when releasing ammonia is smaller than that of CaCl₂ as simple substance, and the reversibly available heat storage density is also small.

PTL 2 appears to describe that an appropriate amount of sodium chloride (NaCl) and/or potassium chloride (KCl) is mixed into zinc chloride (ZnCl₂) in a molten state thereby to allow the ZnCl₂, which reacts with NH₃, to have a reduced vapor pressure and melting temperature. However, the NaCl and KCl in this case may be used merely for the purpose of stabilizing the molten ZnCl₂ which absorbs/releases NH₃. In other words, PTL 2 does not provide any novel chemical heat storage material that has different characteristics than those of conventional ones.

PTL 3 to PTL 5 appear to disclose chemical heat storage systems and the like, and exemplify metal halides as examples of a chemical heat storage material to be used. However, nothing therein describes specific features of the chemical heat storage material itself

PTL 6 discloses an apparatus comprising a metal halide, nitrate, nitrite, sulfide, oxalate, sulphate or chlorate salt or double metal chloride salt, or mixtures, or eutectic, peritectic or stoichiometric mixtures of said salts, of a metal selected from the group consisting of alkali and alkaline earth metal, transition metal, aluminum, zinc, copper, cadmium and tin.

The present invention has been created in view of such circumstances, and the object of the present invention includes providing a novel chemical heat storage structure that uses a chemical heat storage material which has a different pressure/temperature range and a different change in coordination number where the heat medium absorption/release reaction occurs from those of conventional chemical heat storage material comprising single metal salt and which matches a heat medium storage material in a further enhanced manner thereby to allow the chemical heat storage system to efficiently be operated.

### [Solution to Problem]

As a result of intensive studies to solve such problems and repeating trial and error, the present inventors have successfully synthesized, from calcium chloride (CaCl₂) and strontium chloride (SrCl₂) as single metal salts, Ca_{0.5}Sr_{0.5}Cl₂ (CaSrCl₄) which is a double salt different from the metal salt mixture of the single metal salts. It has been found that this double metal salt causes the heat medium absorption/release reaction under a different condition from those for conventional single metal salts and exhibits a large change in coordination number. Developing this achievement, the present invention has been accomplished as will be described hereinafter.

### «Chemical heat storage material»

(1) The chemical heat storage material used in the chemical heat storage structure according to the present invention is a chemical heat storage material suitable for reacting exothermic or endothermic due to absorption or release of a heat medium, and comprises a double metal salt (MXₙ, n: average valence number of M) that is a metal halide comprising a metal element (M) and a halogen element (X), and at least one of the metal element and the halogen element comprises two or more types of elements, wherein the double metal salt is a double alkaline-earth metal halide that comprises two or more types of alkaline-earth metal elements and a halogen element.
(2) The chemical heat storage material used in the chemical heat storage structure according to the present invention is not a simple mixture of single metal salts (compounds in each of which one type of metal ion (cation) and one type of anion are ionically bonded), but comprises a double metal salt in which two or more types of alkaline-earth metal elements and a halogen element are combined in the atomic level (ionically bonded).

This double metal salt can exhibit various characteristics different from those of single metal salts and mixture thereof (metal salt mixture) which have been used as conventional chemical heat storage material. For example, characteristics, such as the crystal structure, the equilibrium pressure where the heat medium absorption/release reaction occurs, and the change in coordination number at the time of the reaction, are different from those of conventional single metal salts. Characteristics, such as the equilibrium pressure and the change in coordination number, can be varied by adjusting the ratio of elements that constitute the double metal salt (combining ratio). According to the present invention, therefore, a chemical heat storage material of high heat storage density can be provided which is suitable for improving the operating characteristics of the heat medium storage material and the efficiency of the chemical heat storage system.
(3) Although the reason is not necessarily sure that the double metal salt according to the present invention develops, in such a way, different characteristics from those of conventionally used single metal salts, it may be considered under present circumstances as below. That is, the average ion radius ratio and the electronegativity ratio of cations and anions appear to be appropriate values thereby to realize a crystal structure and a cell volume that provide a large change in coordination number.
(4) Provided that the chemical heat storage material used in the chemical heat storage structure according to the present invention comprises the above-described double metal salt, it may also comprise two or more types of double metal salts, or may be one in which one or more double metal salts and one or more single metal salts are mixed. Mixing other metal salts or other appropriate substances into the double metal salt, and adjusting components of the chemical heat storage material, can further optimize the matching with the heat medium storage material, the equilibrium region of the heat medium absorption/release reaction, the change in coordination number of the heat medium, and other factors.

### «Manufacturing method for chemical heat storage material»

The above-described chemical heat storage material used in the chemical heat storage structure according to the present invention may be obtained by a manufacturing method as below, for example. That is, the above-described chemical heat storage material can be obtained through a calcination step that calcines a metal salt mixture obtained by mixing two or more types of metal salts. The calcination step appears to diffuse metal ions (e.g., Ca²⁺ and Sr²⁺) and halogen ions (such as Cl⁻and Br⁻) contained in the metal salts to generate a double metal salt (e.g., CaₓSr₁₋ₓCl₂) which is more thermodynamically stable than a simple metal salt mixture.

The manufacturing method may further comprise a molding step that obtains, before the calcination step, a molded body in which the metal salt mixture is pressurized and molded, and the calcination step may be a step that calcines the molded body to obtain a calcined body. This allows a more homogeneous chemical heat storage material to be obtained. Note that the obtained calcined body may be used as a chemical heat storage material without being further processed, or may also be used after being fractured or crushed.

### «Chemical heat storage structure»

(1) The present invention provides a chemical heat storage structure characterized by comprising the above-described chemical heat storage material and a binder that holds the chemical heat storage material, wherein the binder comprises a carbon fiber that is a highly thermal-conductive material having a higher thermal conductivity than that of the chemical heat storage material. This allows a chemical heat storage structure to be obtained which has a form satisfying the specifications of a reactor and other related devices and which also has an enhanced mechanical strength.
(2) It may be preferred that the chemical heat storage structure further comprises a highly thermal-conductive material having a higher thermal conductivity than those of the chemical heat storage material and the binder. Containing such a highly thermal-conductive material allows the heat exchange rate between the chemical heat storage structure and the external to be increased, so that the heat medium absorption/release reaction is facilitated thereby to improve the efficiency of the chemical heat storage system. Note that the binder and the highly thermal-conductive material need not be configured of different materials, and may be configured of the same material. For example, carbon fiber as a highly thermal-conductive material can be used as the binder.

### «Others»

Unless otherwise stated, a numerical range "x to y" as used herein includes the lower limit value x and the upper limit value y. Various numerical values or any numerical value included in various numerical ranges described herein may be freely selected or extracted as a new lower limit value or upper limit value, and any numerical range such as "a to b" may thereby be newly provided using such a new lower limit or upper limit.

### [Brief Description of Drawings]

[Fig. 1]

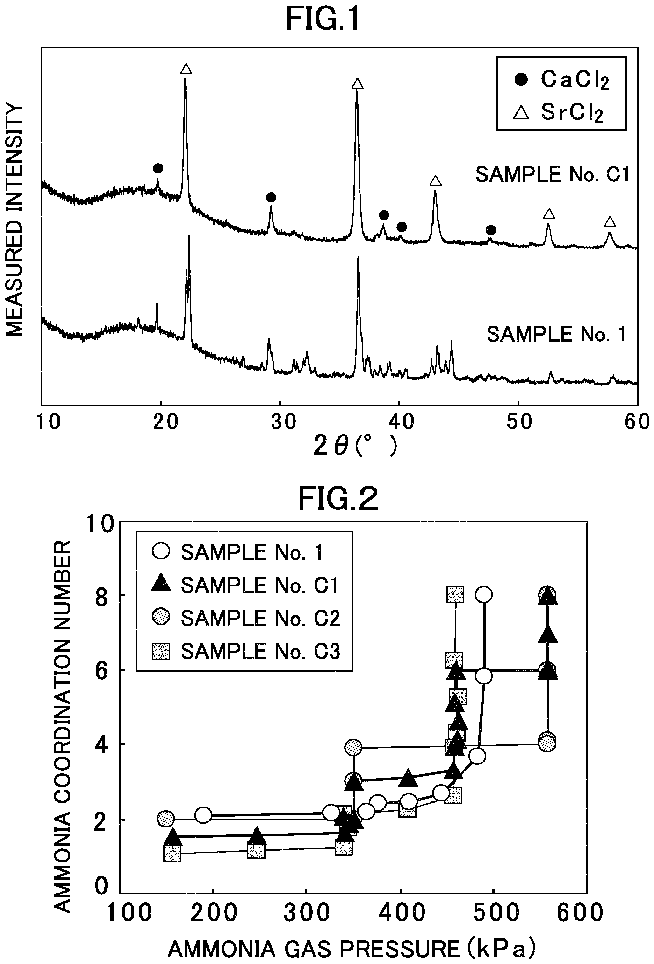

   Fig. 1 is a graph illustrating X-ray diffraction patterns of respective samples.
[Fig. 2]
   Fig. 2 is a graph illustrating a relationship between the ammonia gas pressure and the ammonia coordination number of each sample.
[Fig. 3A]

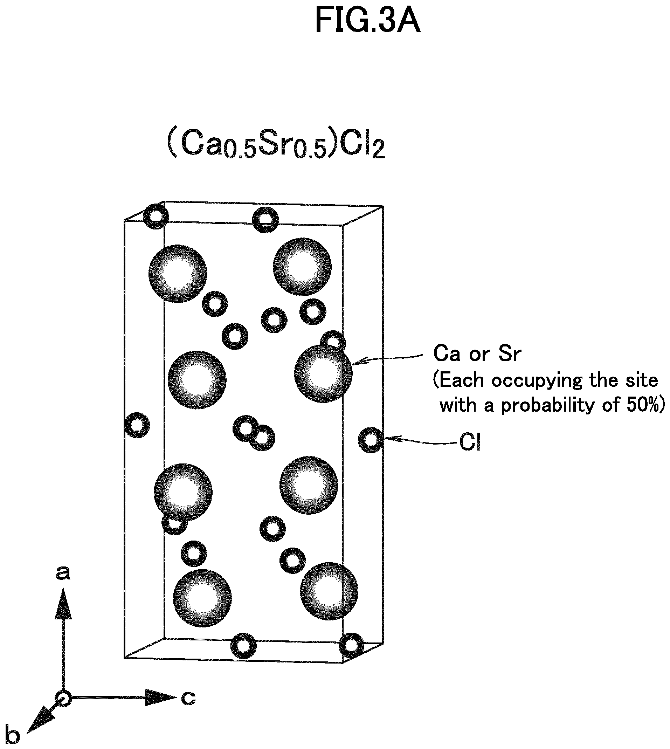

   Fig. 3A is a diagram illustrating the crystal structure of a double metal salt (Ca_{0.5}Sr_{0.5}Cl₂) that constitutes the chemical heat storage material of Sample No. 1.
[Fig. 3B]

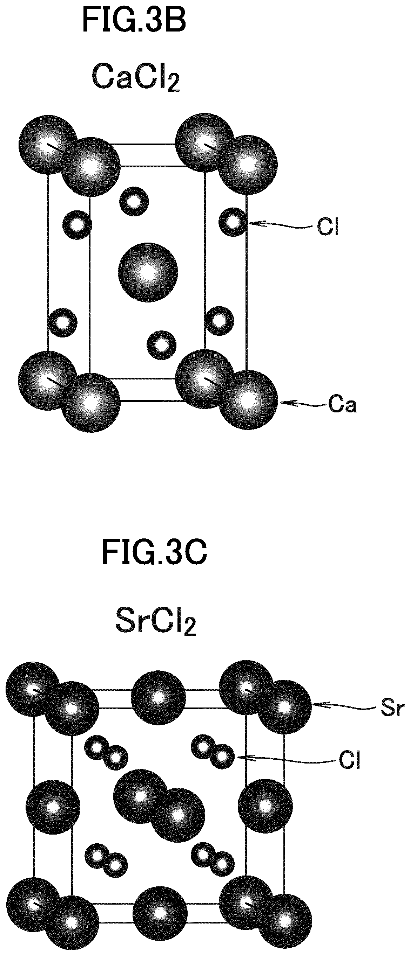

   Fig. 3B is a diagram illustrating the crystal structure of a single metal salt (CaCl₂) that is one raw material thereof.
[Fig. 3C]
   Fig. 3C is a diagram illustrating the crystal structure of a single metal salt (SrCl₂) that is the other raw material thereof.

### [Description of Embodiments]

The present invention will be described in more detail with reference to embodiments of the invention. One or more contents freely selected from the description herein may be added to the above-described features of the present invention. The contents described herein may be applied not only to the chemical heat storage material but also appropriately to the manufacturing method for the same and the heat storage structure. Features regarding the manufacturing method, when understood as a product-by-process, may also be features regarding a product. Which embodiment is the best or not is different in accordance with objectives, required performance and other factors.

### «Chemical heat storage material»

### (1) MXₙ

The double metal salt according to the present invention may be represented by MXₙ (M: metal element, X: halogen element, MXₙ, n: average valence number of M), and is a double metal salt in which at least one of M and X comprises two or more types of elements. The average valence number (n) of M as used herein refers to an average value of ion valence numbers when the plural metal elements become respective metal ions. For a double metal salt (M1ₓM2₁₋ₓXₙ) according to the present invention that comprises two types of metal elements (M1 and M2) and one type of halogen element (X), we obtain n=m1×x+m2×(1-x), where m1 represents the ion valence number of M1, m2 represents the ion valence number of M2, and x (0<x<1) represents the ratio of the number of atoms of M1 to the total number of atoms of the metal elements (combining ratio).

### (2) Crystal structure

The double metal salt according to the present invention may take various crystal structures depending on the constituent elements. For example, the double metal salt may have a crystal structure, such as CaF₂-type, SrI₂-type, CaCl₂-type, SrBr₂-type, PbCl₂-type, CdCl₂-type or CdI₂-type crystal structure. The crystal structure of the double metal salt may be, but not limited to, different from those of the single metal salts as the basis, or may otherwise be the same therewith. It should be appreciated that the cell volume of the double metal salt has a different value from those of the single metal salts even in the case of the same crystal structures. This allows the double metal salt to develop different characteristics (such as the equilibrium pressure and the change in coordination number) from those of the single metal salts.

The double metal salt may preferably be such that the coordination number of the heat medium changes rapidly in a certain operating region because in this case the heat storage density that can match the heat medium storage material becomes high. In this respect, it may be preferred that the double metal salt has a crystal structure in which the coordination number of the heat medium changes by at least 4 or more, preferably 5 or more, and further preferably 6 or more, in the vicinity of (before and after) an equilibrium region where the heat medium absorption/release reaction for absorbing or releasing the heat medium becomes an equilibrium state.

### (3) Affinity

The double metal salt according to the present invention comprises two or more types of metal elements (M1, M2, ...), such that it is preferred that those metal elements are elements having high affinity with each other. This allows a stable double metal salt to be readily synthesized. In addition, the double metal salt which is obtained from raw materials of two or more types of single metal salts comprising affinitive metal elements may be, although depending on the composition and the combining ratio, such that the operating region of the heat medium absorption/release reaction tends to be at an intermediate between those of the single metal salts. Therefore, a blank region of the operating region, which would occur when single metal salts were merely used, can be filled with that of a double metal salt for which the types of single metal salts and the compounding ratio (combining ratio) thereof are appropriately selected. This can result in improving the matching with the heat medium storage material and the efficiency of the chemical heat storage system. Note that the affinity as used herein includes not only a situation where two or more metal elements as simple substances have similar characteristics but also a situation where halides (single metal salts) of two or more metal elements cause similar heat quantities during the heat medium absorption/release reaction. For example, if halides of two or more metal elements generate similar heat quantities when those halides react with water as the heat medium to form hydrates or when those halides react with ammonia as the heat medium to form ammine complexes, then those two or more metal elements are referred to as having affinity herein.

Specific examples of a situation where plural metal elements are affinitive include a case where the metal elements are congeners, a case where the metal elements can become ions of the same valence number, a case where the metal elements have similar arrangements of electrons, and a case where the metal elements generate mutually a solid solution. Such specific examples further include a case where single metal salts (halides) of the metal elements have similar operating regions that cause the heat medium absorption/release reaction, similar coordination numbers, or similar changes in coordination numbers.

Specific examples of a set of affinitive metal elements include a set among alkaline-earth metal elements (such as Mg, Ca, Sr, and Ba). According to the present invention, the double metal salt comprising such metal elements is a double alkaline-earth metal halide that comprises two or more types of alkaline-earth metal elements and a halogen element. More specifically, CaₓSr₁₋ₓCl₂ (0<x<1) as the double alkaline-earth metal halide may be preferable. In this case, the crystal index value (V/Z) may be 50-130 cubic angstroms, preferably 75-90 cubic angstroms, and more preferably 77-85 cubic angstroms. This double metal salt may take a crystal structure of either CaF₂-type, SrI₂-type, CaCl₂-type, or SrBr₂-type depending on the value of combining ratio x.

In addition to the above, a preferable example of the double metal salt according to the present invention includes Sr_{y}Ba_{1-y}Cl₂ (0<y<1). Note that y represents the combining ratio.

### (4) Others

The chemical heat storage material used in the chemical heat storage structure according to the present invention may comprise one or more double metal salt single substances, or a mixture of one or more double metal salts and one or more single metal salts. Moreover, each double metal salt or each single metal salt may be a hydrate or an ammine complex.

### «Manufacturing method for chemical heat storage material»

### (1) Raw materials

The metal salt as a raw material may be, although the type is not limited, one which consists of a single metal salt, or one which comprises a double metal salt. Examples of the metal salt as a raw material include alkaline-earth metal chlorides such as MgCl₂, CaCl₂ or SrCl₂. These metal salts may be freely combined, but the combination of affinitive metal salts may be preferable as described above.

### (2) Molding step

The molding step, which is a step that obtains a molded body in which the metal salt mixture obtained by mixing two or more types of metal salts is pressurized and molded, may be conducted as necessary. The molding pressure during this step may be 40 MPa or more, and preferably 60 MPa or more, for example. If the molding pressure is unduly low, then the contact between the two or more metal salts will be insufficient, and the diffusion in the calcination step cannot sufficiently be facilitated. The upper limit of the molding pressure is not restricted, but the productivity may be improved if the upper limit is 300 MPa or less, and preferably 150 MPa or less. To avoid the deliquescence, it may be preferred that the molding step is performed under a low humidity environment where the water concentration is 0.3% or less, preferably 100 ppm or less, more preferably 10 ppm or less, and most preferably 1 ppm or less.

### (3) Calcination step

The calcination step is a step that calcines the above metal salt mixture, and this step may be necessary for diffusing the constituent elements of the double metal salt to combine them in the atomic level. If the molding step is performed before this calcination step, then the calcination step is a step that calcines the above molded body to obtain a calcined body. The calcination temperature may preferably be 300-800 degrees C, more preferably 500-700 degrees C, and most preferably 550-650 degrees C. If the calcination temperature is unduly low, then the diffusion of each element will be insufficient, while on the other hand, if the calcination temperature is unduly high, then the productivity may be poor. To prevent the chemical heat storage material from deteriorating due to the reaction with the atmospheric components, the calcination step may preferably be performed under a degree of vacuum of 1,000 Pa or less, more preferably 100 Pa or less, and most preferably 10 Pa or less.

### (4) Others

The calcined body obtained in the calcination step may be used as a chemical heat storage material without being further processed, or may also be used after being fractured or crushed as necessary. In an alternative embodiment, powder particles of the double metal salt may be formed into pellets to be used as a chemical heat storage material.

### «Chemical heat storage structure»

The chemical heat storage structure according to the present invention basically comprises: the above-described chemical heat storage material that comprises the double metal salt; and the above-mentioned binder that holds the chemical heat storage material, and may further comprise a highly thermal-conductive material as necessary.

### (1) Chemical heat storage material

The chemical heat storage material (heat storage particle) as a raw material may be a hydrate or an ammine complex of the above-described double metal salt. This chemical heat storage material may be powder-like or grain-like, but the particle form and the particle diameter thereof are not restricted. In consideration of properties, such as the mixing ability with the binder and the formability, it may be preferred that the particle diameter is 1 micrometer to 1 mm when observed using an electron microscope.

### (2) Binder

Carbon fiber is used as the binder. Carbon fiber used as the binder also functions as a highly thermal-conductive material while forming the framework structure of the chemical heat storage structure thereby to enhance the mechanical strength.

### (3) Highly thermal-conductive material

Mixing the highly thermal-conductive material allows a thermal conduction pass to be formed in the chemical heat storage structure thereby to enhance the thermal conductivity. The highly thermal-conductive material may be, such as, but not limited to, carbon fiber or ceramics having a high thermal conductivity. The carbon fiber may be PAN-based carbon fiber made of acrylic fiber or PITCH-based carbon fiber made of pitch. Examples of ceramics include silicon carbide (SiC) and aluminum nitride (AlN). In any case, preferable ones may be those which are stable in the heat medium, such as ammonia.

The reason that the chemical heat storage structure having a higher thermal conductivity is preferable may be as follows. Performance of the chemical heat storage system depends on the reaction rate between the chemical heat storage structure and the heat medium (such as water or ammonia). This reaction rate is affected by (i) the infiltration rate of the heat medium into the chemical heat storage structure (absorption rate, release rate), (ii) the generation rate of hydrate, ammine complex or the like, and (iii) the heat exchange rate between the chemical heat storage structure and the external. Among them, the heat exchange rate is rate-determining and considerably affects the performance of the chemical heat storage system. Therefore, the chemical heat storage structure provided therein with a proper amount of the highly thermal-conductive material (such as carbon fiber) having excellent thermal conductivity and thermal transfer ability may enhance the heat exchange rate and thus improve the performance of the chemical heat storage system.

### «Manufacturing method for chemical heat storage structure»

The manufacturing method for the chemical heat storage structure according to the present invention basically comprises: a structure mixing step that mixes the above-described chemical heat storage material (heat storage particle) and the binder and, if necessary, the highly thermal-conductive material; and a structure molding step that pressurizes and molds the obtained mixture, and may preferably further comprise a calcination step that heats the molded body and causes it to be a calcined body.

### (1) Structure mixing step

The structure mixing step is a step that obtains a mixture in which the chemical heat storage material and the binder and, if necessary, the highly thermal-conductive material are mixed (or dispersed), for example. The method of mixing is not restricted, but if the mixture contains a material, such as carbon fiber, which is likely to be damaged, then raw materials may be dispersed into a dispersion medium and the dispersion medium may be removed thereby to provide the mixture. Note that the metal chloride that constitutes the chemical heat storage material readily reacts with water to deliquesce or cause some changes. In this respect, the dispersion medium may preferably be an organic dispersion medium, such as acetone, heptane, hexane or toluene, which is free from water. In any event, this structure mixing step may preferably be conducted under a low humidity environment. The "low humidity environment" as used herein may be such that the water concentration in the atmosphere is 0.7% or less, preferably 0.3% or less, and more preferably 0.1% or less.

### (2) Structure molding step

In the structure molding step, pressurizing and molding may be performed by putting the mixture of materials such as the chemical heat storage material and the binder into the cavity of a mold, or compression and shape-forming may otherwise be performed such as by means of roller without using a mold. Any method may be employed depending on the shape of the chemical heat storage structure as needed. The molding pressure in this operation may preferably be 40-300 MPa, and more preferably 60-250 MPa, for example. Unduly low molding pressure may deteriorate the thermal output per volume of the chemical heat storage structure and/or the mechanical strength, while unduly high molding pressure may make it difficult to ensure a certain porosity required for absorbing and releasing the heat medium. This structure molding step may also be performed preferably under a low humidity environment.

### (3) Structure calcination step

Although not necessarily required, the structure calcination step may be performed so that a chemical heat storage structure can be obtained in which materials such as the chemical heat storage material and the binder are strongly bonded. The calcination temperature may preferably be 100-300 degrees C, and more preferably 150-250 degrees C. Unduly low calcination temperature may make it difficult to obtain a strong calcined body (chemical heat storage structure), while unduly high calcination temperature may excessively progress the sintering among the chemical heat storage material particles to block the infiltration of the heat medium into the chemical heat storage structure, thus being undesirable. The calcination step may preferably be performed in a degree of vacuum of 1,000 Pa or less, and more preferably 100 Pa or less. This is because the chemical heat storage material may be prevented from deteriorating due to the reaction with the atmospheric components.

### [Examples]

The present invention will be more specifically described with reference to examples.

### «Preparation of samples»

### <First Example: Sample No. 1>

### (1) Mixing step

As raw materials, powder of hydrate of calcium chloride (CaCl₂·2H₂O) (C5080 available from Sigma-Aldrich Co. LLC.) and powder of hydrate of strontium chloride (SrCl₂·6H₂O) (197-04185 available from Wako Pure Chemical Industries, Ltd.) both being metal halides (alkaline-earth metal chlorides) were prepared. These powders were weighed to have a molar ratio of 1:1 and mixed using an agate mortar, and a powder mixture was thus obtained. Note that this mixing step was performed under a low humidity environment of a water concentration: 1 ppm or less using a glove box available from MIWA MFG CO., LTD.

### (2) Molding step

The powder mixture was pressurized under 0.7 tonf/cm² (68.6 MPa), and a sheet-like molded body of 15×15×2 mm was obtained. This molding step was performed under a low humidity environment of a water concentration: 1 ppm or less using the previously-described glove box.

### (3) Calcination step

This molded body was calcined at 600 degrees C, and a calcined body was obtained. This calcination step was performed in a vacuum processing furnace of 1 Pa or less. The calcined body obtained in such a manner was subjected to various measurements as will be described later, as Sample No. 1. Note that this calcined body was crushed to be used as a sample for X-ray diffraction measurement.

### <Comparative Examples: Samples No. C1-C3>

### (1) Sample No. C1

Powder of CaCl₂ (C4901 available from Sigma-Aldrich Co. LLC.) and powder of SrCl₂ (439665 available from Sigma-Aldrich Co. LLC.) were weighed to have a molar ratio of 1:1 and mixed using a scoopula. The powder mixture obtained in such a manner was used as Sample No. C1. Note that mixing of raw materials was performed under a low humidity environment of a water concentration: 1 ppm or less using the previously-described glove box.

### (2) Sample No. C2 and Sample No. C3

The above powder of CaCl₂ itself was used as Sample No. C2, and the above powder of SrCl₂ itself was used as Sample No. C3. Samples No. C1-C3 were also subjected to the same measurements as those for Sample No. 1.

### «Measurements»

### (1) X-ray diffraction measurement

X-ray diffraction measurement was conducted for each of the chemical heat storage materials (powders) of Sample No. 1 and Sample No. C1. Respective X-ray diffraction patterns obtained in such a manner are shown in Fig. 1. Note that the measurement was conducted under a room temperature/atmospheric air condition using RINT-TTR, including a CuK alpha radiation source, available from Rigaku Corporation. Simplified sealing treatment was employed to prevent reactions between the sample and the atmospheric components during the measurement.

### (2) Lattice constants

To determine the unit cell volume (V) related to V/Z of each sample, the crystal system of the sample and the diffraction index of each diffraction line were identified from the profile obtained through the X-ray diffraction measurement, and the lattice constants of the crystal of the sample were calculated using the least-square method.

### (3) Pressure-composition isotherm measurement

A reactor was filled with each of chemical heat storage materials of Samples No. 1-C3, and the relationship between the pressure (150-600 kPa) and the composition (ammonia coordination number) at a constant temperature (69 degrees C) was examined on the basis of the volume tire the method. Results of respective samples are collectively shown in Fig. 2. This measurement was performed specifically as below. The reactor (inner volume of about 5 cc) was filled with the sample under a low humidity environment of a water concentration of 1 ppm or less and sealed. The reactor was connected to a handmade Sieverts-type apparatus and evacuated to vacuum. The space of the reactor filled with the sample was heated to 69 degrees C using a water bath, and pressurized with NH₃ to 570 kPa. Thereafter, the pressure was reduced to 100 kPa at 69 degrees C, and the measurement was initiated from this state.

Note that the reactor used herein is made of stainless steel and provided with valves and pressure gauges for supply/degassing of ammonia gas.

This measurement was repeated five times for Sample No. 1, which exhibited a similar pressure change and change in coordination number every time. In other words, even if absorption/release of ammonia was repeated, deterioration was not observed in the chemical heat storage material of Sample No. 1.

### «Evaluation»

### (1) Crystal structure

As apparent from the X-ray diffraction pattern shown in Fig. 1, a CaCl₂-type crystal structure and a SrCl₂-type crystal structure corresponding respectively to the CaCl₂ powder and the SrCl₂ powder as raw materials were observed for Sample No. C1.

In contrast, Sample No. 1 obtained by mixing, molding and calcinating the raw materials was found to have a SrI₂-type crystal structure different from the crystal structures of CaCl₂ and SrCl₂. From the above, it can be said that Sample No. 1 is a novel double metal chloride (Ca_{0.5}Sr_{0.5}Cl₂) in which the constituent elements are combined in the atomic level and which is different from CaCl₂ and SrCl₂. Figs. 3A-3C show the schematic crystal structures of Ca_{0.5}Sr_{0.5}Cl₂ of Sample No. 1 and CaCl₂ and SrCl₂ as raw materials thereof, respectively. These crystal structure diagrams were derived on the basis of the result of Rietveld analysis for the X-ray diffraction patterns shown in Fig. 1. Also from these results, Ca_{0.5}Sr_{0.5}Cl₂ of Sample No. 1 was confirmed to have the SrI₂-type crystal structure different from the CaCl₂ (CaCl₂-type crystal structure) and the SrCl₂ (CaF₂-type crystal structure) as the raw materials thereof.

### (2) V/Z

For each sample, the crystal index value (V/Z) was obtained by dividing a unit cell volume (V) calculated from the lattice constants by the number of chemical units (Z) of the sample. The V/Z of Sample No. 1 was 81.3 cubic angstroms (V: 650.4 cubic angstroms/Z: 8). On the other hand, the V/Z of Sample No. C2 (CaCl₂) was 83.9 cubic angstroms (V: 167.8 cubic angstroms/Z: 2), and the V/Z of Sample No. C3 (SrCl₂) was 84.7 cubic angstroms (V: 338.7 cubic angstroms/Z: 4). From the above, it may be understood that Sample No. 1 has a smaller V/Z than those of Sample No. C2 and Sample No. C3. One of reasons that the V/Z of Sample No. 1 is not an intermediate value between those of Sample No. C2 and Sample No. C3 may be due to having another crystal structure (SrI₂-type crystal structure).

It can be said from the above that the mixture of CaCl₂ and SrCl₂ is molded and calcined thereby to facilitate the diffusion of calcium ions (Ca²⁺), strontium ions (Sr²⁺) and chlorine ions (Cl⁻) so that the double metal chloride (Ca_{0.5}Sr_{0.5}Cl₂) is generated to have a thermodynamically stable crystal structure compared to that of a simple mixture of CaCl₂ and SrCl₂.

### (3) Pressure change and change in coordination number

As found from Fig. 2, the Ca_{0.5}Sr_{0.5}Cl₂ of Sample No. 1 comes to an equilibrium state when the ammonia pressure is 490 kPa (equilibrium pressure), and an ammonia absorption/release reaction (heat medium absorption/release reaction) occurs as below.
(Reaction 1-1/ammonia pressure: 490 kPa)
Ca_{0.5}Sr_{0.5}Cl₂·2NH₃+6NH₃ ↔ Ca_{0.5}Sr_{0.5}Cl₂·8NH₃

It may therefore be understood that using the chemical heat storage material of Sample No. 1 allows the coordination number of ammonia to change even six when the ammonia absorption/release reaction once occurs under a certain pressure (equilibrium pressure), so that a large endotherm or exotherm is possible and a large heat storage density can thus be obtained. In addition, as previously-described, this chemical heat storage material can be repeatedly used and therefore has excellent durability.

In contrast, also as found from Fig. 2, Sample No. C1 may involve 4-step reaction as below depending on the equilibrium ammonia pressure where the ammonia absorption/release reaction comes to an equilibrium state.
(Reaction C1-1/ammonia pressure: 340 kPa)
   0.5SrCl₂·NH₃+0.5NH₃ ↔ 0.5SrCl₂·2NH₃
(Reaction C1-2/ammonia pressure: 350 kPa)
   0.5CaCl₂·2NH₃+NH₃ ↔ 0.5CaCl₂·4NH₃
(Reaction C1-3/ammonia pressure: 460 kPa)
   0.5SrCl₂·2NH₃+3NH₃ ↔ 0.5SrCl₂·8NH₃
(Reaction C1-4/ammonia pressure: 560 kPa)
   0.5CaCl₂·4NH₃+2NH₃ ↔ 0.5CaCl₂·8NH₃

If the chemical heat storage material of Sample No. C1 is used, then the change in coordination number due to the ammonia absorption/release reaction caused under one equilibrium pressure is merely 0.5-3. That is, the endotherm or exotherm is small when the ammonia absorption/release reaction once occurs, and the heat storage density is also small. In addition, to obtain a large change in coordination number (6.5), the ammonia pressure may have to be varied at least within a wide range of 340-560 kPa (pressure difference of 220 kPa) so that the Reactions C1-1 to C1-4 progress continuously, thus being inefficient.

As found from Fig. 2, the ammonia absorption/release reaction of Sample No. C2 may be 2-step reaction as below depending on the equilibrium ammonia pressure.
(Reaction C2-1/ammonia pressure: 350 kPa)
   CaCl₂·2NH₃+2NH₃ ↔ CaCl₂·4NH₃
(Reaction C2-2/ammonia pressure: 560 kPa)
   CaCl₂·4NH₃+4NH₃ ↔ CaCl₂·8NH₃

Also in this case, the change in coordination number due to the ammonia absorption/release reaction caused under one equilibrium pressure is 2 or 4, and the endotherm or exotherm is small when the ammonia absorption/release reaction once occurs. In addition, to obtain a large change in coordination number (6), the ammonia pressure may have to be varied at least within a wide range of 350-560 kPa (pressure difference of 210 kPa) so that the Reactions C2-1 and C2-2 progress continuously, thus also being inefficient.

As found from Fig. 2, the ammonia absorption/release reaction of Sample No. C3 may also be 2-step reaction as below depending on the equilibrium ammonia pressure.
(Reaction C3-1/ammonia pressure: 340 kPa)
   SrCl₂·NH₃+NH₃ ↔ SrCl₂·2NH₃
(Reaction C3-2/ammonia pressure: 460 kPa)
   SrCl₂·2NH₃+6NH₃ ↔ SrCl₂·8NH₃

In this case, the change in coordination number due to the ammonia absorption/release reaction caused under one equilibrium pressure is 1 or 6, but in order to obtain a larger change in coordination number (7), the ammonia pressure may have to be varied at least within a wide range of 340-460 kPa (pressure difference of 120 kPa) so that the Reactions C3-1 and C3-2 progress continuously.

Thus, the chemical heat storage material comprising the double metal salt such as Sample No. 1 causes a large change in coordination number in the vicinity of the equilibrium ammonia pressure unlike the conventional single metal salts and the metal salt mixture thereof. Therefore, the chemical heat storage material according to the present invention can be used in a chemical heat storage system thereby to improve the efficiency of the system. Moreover, the chemical heat storage material according to the present invention exhibits a different equilibrium ammonia pressure than those of single metal salts thereby to improve the matching with a heat medium storage material which would have a poor matching with conventional single metal salts.

<Second Example: Sample No. 2>

### (1) Preparation of sample

A chemical heat storage material (Sample No. 2) was prepared using the same raw material powders as those for the First Example except for changing the mixing molar ratio to a different value from that of Sample No. 1. Namely, the mixing molar ratio of Sample No. 2 was CaCl₂·2H₂O:SrCl₂·6H₂O=3:7. Other conditions, such as in each step of mixing, molding and calcinating, for preparing Sample No. 2 were similar to those for Sample No. 1.

### (2) Measurement

Sample No. 2 obtained in such a manner was subjected to the pressure-composition isotherms measurement like for Sample No. 1. Note, however, that the pressure range during this measurement was 200-600 kPa. In this case, an ammonia absorption/release reaction (heat medium absorption/release reaction) as below was caused in Sample No. 2 with the change in coordination number being 6 across a boundary of the ammonia gas pressure: 485 kPa (equilibrium pressure).
Ca_{0.3}Sr_{0.7}Cl₂·2NH₃+6NH₃ ↔ Ca_{0.3}Sr_{0.7}Cl₂·8NH₃

### (3) Evaluation

As apparent from Sample No. 1 and Sample No. 2, even if the combining ratio x of a double metal chloride CaₓSr₁₋ₓCl₂ (0<x<1) varies, the coordination number of ammonia can be drastically changed due to the ammonia absorption/release reaction at a time, provided that the double metal chloride is under a certain pressure (equilibrium pressure) depending on the combining ratio. In other words, it has been confirmed that adjusting the composition of a double metal chloride allows a chemical heat storage material to be obtained which matches the heat medium storage material, and the efficiency of a chemical heat storage system can be widely improved.

## Claims

1. A chemical heat storage structure comprising
a chemical heat storage material suitable for reacting exothermic or endothermic due to absorption or release of a heat medium, wherein
the chemical heat storage material comprises a double metal salt (MXₙ, n: average valence number of M) that is a metal halide comprising a metal element (M) and a halogen element (X), and at least one of the metal element and the halogen element comprises two or more types of elements,
wherein the double metal salt is a double alkaline-earth metal halide that comprises two or more types of alkaline-earth metal elements and a halogen element, and a binder that holds the chemical heat storage material, and
wherein the binder comprises a carbon fiber that is a highly thermal-conductive material having a higher thermal conductivity than that of the chemical heat storage material.

2. The chemical heat storage structure as recited in claim 1, wherein
the heat medium is ammonia or water, and
the chemical heat storage material absorbs the ammonia thereby to be an ammine complex (MXn-aNH3, a: coordination number of ammonia) or absorbs the water thereby to be a hydrate (MXₙ-bH₂O, b: coordination number of water).

3. The chemical heat storage structure as recited in claim 1 or 2, wherein
the double metal salt has a crystal structure in which a coordination number of the heat medium changes by at least 4 or more due to absorption or release of the heat medium.

4. The chemical heat storage structure as recited in any one of claims 1 to 3, wherein
the double metal salt has a crystal structure in which a crystal index value (V/Z) obtained by dividing a unit cell volume (V) by a number of chemical units (Z) of the MXₙ contained in a crystal unit cell is 50 to 130 cubic angstroms.

5. The chemical heat storage structure as recited in any one of claims 1 to 4, wherein
the double metal salt has a crystal structure of either CaF₂-type, SrI₂-type, CaCl₂-type, SrBr₂-type, PbCl₂-type, CdCl₂-type, or CdI₂-type.

6. The chemical heat storage structure as recited in claim 1, wherein
the double alkaline-earth metal halide is CaₓSr₁₋ₓCl₂ (0<x<1).

7. The chemical heat storage structure as recited in any one of claims 1 to 6, further comprising a highly thermal-conductive material having a higher thermal conductivity than those of the chemical heat storage material and the binder.

## Patentansprüche

1. Chemische Wärmespeicherstruktur, umfassend
ein chemisches Wärmespeichermaterial, das zum exothermen oder endothermen Reagieren aufgrund einer Absorption oder Abgabe eines Wärmemediums geeignet ist, wobei
das chemische Wärmespeichermaterial ein doppeltes Metallsalz (MXₙ, n: mittlere Valenzzahl von M), umfasst, das ein Metallhalogenid ist, umfassend ein Metallelement (M) und ein Halogenelement (X), und zumindest eines von dem Metallelement und dem Halogenelement zwei oder mehr Arten an Elementen umfasst,
wobei das doppelte Metallsalz ein doppeltes Erdalkalimetallhalogenid ist, welches zwei oder mehr Arten an Erdalkalimetallelementen und ein Halogenelement umfasst, und ein Bindemittel, das das chemische Wärmespeichermaterial hält, und
wobei das Bindemittel eine Kohlenstoffaser umfasst, welche ein hoch-wärmeleitendes Material mit einer höheren Wärmeleitfähigkeit als das des chemischen Wärmespeichermaterials ist.

2. Chemische Wärmespeicherstruktur nach Anspruch 1, wobei
das Wärmemedium Ammoniak oder Wasser ist, und
das chemische Wärmespeichermaterial das Ammoniak absorbiert, um dadurch ein Aminkomplex (MXₙ-aNH₃, a: Koordinationszahl von Ammoniak) zu sein, oder das Wasser absorbiert, um dadurch ein Hydrat (MXₙ-bH₂O, b: Koordinationszahl von Wasser).

3. Chemische Wärmespeicherstruktur nach Anspruch 1 oder 2, wobei das doppelte Metallsalz eine Kristallstruktur aufweist, in der sich eine Koordinationszahl des Wärmemediums aufgrund der Absorption oder Abgabe des Wärmemediums um zumindest 4 oder mehr ändert.

4. Chemische Wärmespeicherstruktur nach einem der Ansprüche 1 bis 3, wobei das doppelte Metallsalz eine Kristallstruktur aufweist, in der ein Kristallindexwert (V/Z), der erhalten wird durch Dividieren eines Einheitszellvolumens (V) durch eine Anzahl von chemischen Einheiten (Z) von MXₙ, die in einer Kristalleinheitszelle enthalten sind, 50 bis 130 Kubikangström beträgt.

5. Chemische Wärmespeicherstruktur nach einem der Ansprüche 1 bis 4, wobei das doppelte Metallsalz eine Kristallstruktur wahlweise vom CaF₂-Typ, SrI₂-Typ, CaCl₂-Typ, SrBr₂-Typ, PbCl₂-Typ, CdCh-Typ oder CdI₂-Typ aufweist.

6. Chemische Wärmespeicherstruktur nach Anspruch 1, wobei
das doppelte Erdalkalimetallhalogenid CaₓSr₁₋ₓCl₂ (0<x<1) ist.

7. Chemische Wärmespeicherstruktur nach einem der Ansprüche 1 bis 6, ferner umfassend ein hoch-wärmeleitendes Material, das eine höhere Wärmeleitfähigkeit als diejenigen des chemischen Wärmespeichermaterials und des Bindemittels aufweist.

## Revendications

1. Structure de stockage de chaleur chimique comprenant
un matériau de stockage de chaleur chimique apte à réagir de manière exothermique ou endothermique du fait de l'absorption ou de la libération d'un fluide caloporteur, dans laquelle
le matériau de stockage de chaleur chimique comprend un sel de métal double (MXₙ, n : indice de valence moyen de M) qui est un halogénure métallique comprenant un élément métallique (M) et un élément halogène (X), et au moins l'un parmi l'élément métallique et l'élément halogène comprend deux types d'éléments ou plus,
dans laquelle le sel de métal double est un double alcalino-terreux halogénure métallique qui comprend deux types d'éléments alcalino-terreux métallique ou plus et un élément halogène, ainsi qu'un liant qui retient le matériau de stockage de chaleur chimique, et
dans laquelle le liant comprend une fibre de carbone qui est un matériau hautement conducteur thermique ayant une conductivité thermique supérieure à celle du matériau de stockage de chaleur chimique.

2. Structure de stockage de chaleur chimique selon la revendication 1, dans laquelle
le fluide caloporteur est de l'ammoniac ou de l'eau, et
le matériau de stockage de chaleur chimique absorbe l'ammoniac, devenant ainsi un complexe d'amine (MXₙ-aNH₃, a : nombre de coordination de l'ammoniac) ou absorbe l'eau devenant ainsi un hydrate (MXₙ-bH₂O, b : nombre de coordination de l'eau).

3. Structure de stockage de chaleur chimique selon la revendication 1 ou 2, dans laquelle
le sel de métal double a une structure cristalline dans laquelle un nombre de coordination du fluide caloporteur change d'au moins 4 ou plus en raison de l'absorption ou de la libération du fluide caloporteur.

4. Structure de stockage de chaleur chimique selon l'une quelconque des revendications 1 à 3, dans laquelle
le sel de métal double a une structure cristalline dans laquelle une valeur d'indice cristallin (V/Z) obtenue en divisant un volume de cellule unitaire (V) par un nombre d'unités chimiques (Z) du MXₙ contenu dans une cellule unitaire cristalline est compris entre 50 et 130 angströms cubes.

5. Structure de stockage de chaleur chimique selon l'une quelconque des revendications 1 à 4, dans laquelle
le sel de métal double a une structure cristalline de type CaF₂, de type Srl₂, de type CaCl₂, de type SrBr₂, de type PbCl₂, de type CdCl₂, ou de type Cdl₂.

6. Structure de stockage de chaleur chimique selon la evendication 1, dans laquelle
le double alcalino-terreux halogénure métallique est du CaₓSr₁₋ₓCl₂ (0<x<1).

7. Structure de stockage de chaleur chimique selon l'une quelconque des revendications 1 à 6, comprenant en outre un matériau hautement conducteur thermique ayant une conductivité thermique supérieure à celles du matériau de stockage de chaleur chimique et du liant.
